# EUROPÄISCHE PATENTSCHRIFT

(11) **EP 4 180 208 B1**
(45) Veröffentlichungstag und Bekanntmachung des Hinweises auf die Patenterteilung: **15.01.2025**
(21) Anmeldenummer: 22205196.3
(22) Anmeldetag: 03.11.2022
(51) Int. Cl.: B29C 64/118, B29C 64/209, B29C 64/336, B33Y 10/00, B33Y 30/00, B33Y 40/00, A23L 5/00, A61K 9/00

(54) **TEMPERIER- UND ÜBERFÜHRUNGSEINRICHTUNG FÜR EINEN 3D-DRUCKER, ZUR ÜBERFÜHRUNG MINDESTENS EINES KUNSTSTOFFFILAMENTS VON EINEM FESTEN ZUSTAND IN EIN AUFGESCHMOLZENES, ZÄHFLÜSSIGES DRUCKMATERIAL**
TEMPERATURE CONTROL AND TRANSFER DEVICE FOR A 3D PRINTER FOR TRANSFERRING AT LEAST ONE PLASTIC FILAMENT FROM A SOLID STATE INTO A MELTED VISCOUS PRINTING MATERIAL
DISPOSITIF DE THERMORÉGULATION ET DE TRANSFERT POUR UNE IMPRIMANTE 3D, DE TRANSFERT D'AU MOINS UN FILAMENT EN PLASTIQUE À PARTIR D'UN MATÉRIAU D'IMPRESSION VISQUEUX FONDU

(30) Priorität: 11.11.2021 DE 102021212684
(43) Veröffentlichungstag der Anmeldung: 17.05.2023
(73) Patentinhaber: Krause DiMaTec GmbH, 33649 Bielefeld (DE)
(72) Erfinder: Lücking, Christian, 33619 Bielefeld (DE); Tschöke, Philipp, 33605 Bielefeld (DE); Zantop, Dennis, 32832 Augustdorf (DE); Tominski, Johannes, 33184 Altenbeken (DE); Pagel, Karsten, 32052 Herford (DE); Mischura, Wladislaw, 33647 Bielefeld (DE); Jürgens, Simon, 33129 Delbrück (DE); Rohde, Johannes, 33098 Paderborn (DE)
(74) Vertreter: Rau, Schneck & Hübner Patentanwälte Rechtsanwälte PartGmbB

(56) Entgegenhaltungen:
- EP-A1- 3 663 073
- WO-A2-2021/173618

## Beschreibung

Die Erfindung betrifft eine Temperier- und Überführungseinrichtung für einen 3D-Drucker, zur Überführung mindestens eines Kunststofffilaments von einem festen Zustand in ein aufgeschmolzenes, zähflüssiges Druckmaterial. Ferner betrifft die Erfindung einen 3D-Drucker mit einer derartigen Einrichtung.

Derartige Temperier- und Überführungseinrichtungen sind für 3D-Drucker als Hotends bekannt (vgl. beispielsweise den Wikipedia-Eintrag "Prusa i3", abrufbar am 07.08.2021). Die CN 204 566 689 U offenbart einen Mehrfarben-3D-Drucker mit genau einer Düse (single nozzle). Die CN 205 310 843 U offenbart eine Düse mit zwei Führungskanälen, die bis zu einem Auslass getrennt verlaufen. Die CN 205 326 302 U offenbart eine Düse mit einem Vereinigungsabschnitt, in dem sich zwei Einlasskanäle zu einem Auslasskanal vereinigen. Die CN 205 951 287 U offenbart einen Zweifarben-Druckkopf für einen 3D-Drucker. Die EP 3 663 073 A1 offenbart eine Temperier- und Überführungseinrichtung für einen 3D-Drucker, zur Überführung mindestens eines Kunststofffilaments von einem festen Zustand in ein aufgeschmolzenes, zähflüssiges Druckmaterial, mit einer Druckdüse zum Abgeben des Druckmaterials und einem Grundkörper. Der Grundkörper umfasst mindestens einen Filamentkanal mit einem Einlass zum Zuführen des mindestens einen Kunststofffilaments und einem Auslass zum Abgeben des Druckmaterials hin zur Druckdüse, sowie eine Heizaufnahme für eine Heizeinheit, wobei die Heizaufnahme einem Schmelzvolumen des Filamentkanals benachbart ist, in dem im Betrieb der Einrichtung mittels der Heizeinheit aufgeschmolzenes Druckmaterial vorliegt. Der Grundkörper ist aus einem Metall mit einem Wärmeleitungskoeffizienten von weniger als 100 W/(mK) gefertigt. Der Filamentkanal steht über einen einlassseitigen Kühl-Kanalabschnitt des Filamentkanals mit mindestens einem Kühlkörper zur Wärmeabfuhr in wärmeleitender Verbindung. Die WO 2021/173618 A2 offenbart verschiedene Ausführungen von Hotends.

Es ist eine Aufgabe der vorliegenden Erfindung, eine Temperier- und Überführungseinrichtung der eingangs genannten Art derart weiterzubilden, dass zusätzliche Materialklassen für den Grundkörper erschließbar sind.

Diese Aufgabe ist erfindungsgemäß gelöst durch eine Temperier- und Überführungseinrichtung mit den im Anspruch 1 angegebenen Merkmalen. Erfindungsgemäß wurde erkannt, dass durch eine Auslegung einer Temperier- und Überführungseinrichtung, die auch als Hotend bekannt ist, für ein Grundkörper-Metall aus einem im Vergleich zum im Stand der Technik regelmäßigen Werkstoff Aluminium deutlich geringeren Wärmeleitungskoeffizienten, die Möglichkeit geschaffen ist, Materialklassen nicht aufgrund einer Optimierung der Wärmeleitung auszuwählen, sondern nach anderen Anforderungen hin zu selektieren. Es kann beispielsweise ein Grundkörper aus einem lebensmittelechten Metall zum Einsatz kommen, der beispielsweise die EU-Verordnungen 1935/2004 und/oder, hinsichtlich der Herstellungsvorgaben, 2023/2006 erfüllt. Das Hotend kann dann für Anwendungen aus der Lebensmittelindustrie und/oder der Medizintechnik zum Einsatz kommen. Das Grundkörper-Material kann mittels Laser-Strahlschmelzen verarbeitbar sein.

Der Grundkörper der Temperier- und Überführungseinrichtung kann insgesamt einstückig gefertigt sein.

Der Filamentkanal steht über einen einlassseitigen Kühl-Kanalabschnitt des Filamentkanals mit mindestens einem Kühlkörper zur Wärmeabfuhr in wärmeleitender Verbindung. Mindestens ein derartiger Kühlkörper hat sich zur Wärmeabführung vom einlassseitigen Kühl-Kanalabschnitt hin zur Umgebung bewährt. Der Kühlkörper ist so gestaltet, dass Kühlluft hin zum Kühl-Kanalabschnitt geführt wird.

Die Temperier- und Überführungseinrichtung kann mit einer Wärmeleitungs-Unterbrechungskomponente eines Düsenkopfes des 3D-Druckers verbunden sein. Die Wärmeleitungs-Unterbrechungskomponente kann für eine weitgehende thermische Entkopplung der Temperier- und Überführungseinrichtung zu stromaufwärts liegenden Kunststofffilament-Führungskomponenten des 3D-Druckers sorgen. Das Material der Wärmeleitungs-Unterbrechungskomponente hat einen Wärmeleitungskoeffizienten, der regelmäßig kleiner ist als 100 W(nK) und der noch geringer sein kann. Das Material des Grundkörpers einerseits und das Material der Wärmeleitungs-Unterbrechungskomponente andererseits können Wärmeleitungskoeffizienten aufweisen, die sich um nicht mehr als 50%, um nicht mehr als 20%, um nicht mehr als 10% oder auch um nicht mehr als 5% unterscheiden. Insbesondere kann das Material des Grundkörpers den gleichen Wärmeleitungskoeffizienten aufweisen wie das Material der Wärmeleitungs-Unterbrechungskomponente.

Der Grundkörper kann eine Komponente der Temperier- und Überführungseinrichtung darstellen, die separat zur Wärmeleitungs-Unterbrechungskomponente gefertigt ist und mit dieser mechanisch verbunden ist.

Eine Ausführung des Grundkörpers nach Anspruch 2 hat sich besonders bewährt. Bei dem Grundkörper-Metall kann es sich um einen Edelstahl handeln. Ein Kohlenstoffanteil des Grundkörper-Metalls kann im Bereich von 2 % liegen. Das Grundkörper-Metall kann einen Chromanteil aufweisen. Das Grundkörper-Metall kann einen Nickelanteil aufweisen. Das Grundkörper-Metall kann einen Molybdänanteil aufweisen. Bei dem Grundkörper-Metall kann es sich um einen V2A- oder um einen V4A-Edelstahl handeln, insbesondere um einen Stahl mit der Werkstoffbezeichnung 1.4404 oder auch 1.4452 oder 1.4541.

Eine Filamentkanal-Wandstärkenausführung nach Anspruch 3 führt dazu, dass der Filamentkanal insgesamt schnell auch dann eine Umgebungstemperatur erreichen kann, wenn er aus einem Material mit vergleichsweise geringem Wärmeleitungskoeffizient gefertigt ist. Die Wandstärke des Filamentkanals zwischen dem Einlass und dem Auslass kann höchstens 0,3 mm betragen oder kann auch höchstens 0,2 mm betragen. Diese Wandstärke ist regelmäßig größer als 0,01 mm. Im Bereich eines Einlass-Anschlusses kann die Wandstärke auch höher sein.

Der Kühlkörper kann eine Mehrzahl von Kühlrippen umfassen.

Eine aktive Kühlung nach Anspruch 5 erhöht die Kühlleistung, sodass Wärme vom einlassseitigen Kühl-Kanalabschnitt effektiv abtransportiert werden kann. Der Filamentkanal kann dann einlassseitig effektiv gekühlt werden, was eine thermische Belastung einlassseitiger Komponenten verringert und insbesondere vermeidet, dass dort das Filament unerwünscht aufgeschmolzen ist.

Eine Ausführung des Kühlkörpers nach Anspruch 6 kann eine besonders effektive Wärmeübertragung gewährleisten.

Eine Abstands-Ausführung nach Anspruch 7 führt zu einem effektiven Wärmeübergang zwischen der Heizeinheit und dem Schmelzvolumen, sodass auch bei der Verwendung eines Grundkörper-Metalls mit einem kleinen Wärmeleistungskoeffizienten ein effektives Aufheizen des Schmelzvolumens gegeben ist. Der Abstand zwischen dem Schmelzvolumen und dem Heizeinheit-Aufnahmevolumen kann höchstens 0,4 mm, kann höchstens 0,3 mm und kann auch höchstens 0,2 mm betragen. Dieser Abstand ist regelmäßig größer als 0,01 mm.

Eine 3D-Druckfertigung des Grundkörpers der Einrichtung nach Anspruch 8 ermöglicht insbesondere eine optimierte Gestaltung der Kunststofffilament-Führungskanäle und/oder eine Optimierung eines erwünschten Wärmeübergangs zwischen der Heizeinheit und dem Schmelzvolumen. Zudem kann erreicht werden, dass die Einlasskanal-Anschlüsse mit hohem Temperaturgefälle zum Schmelzvolumen vorliegen, was wiederum Anforderungen an eine Kühlung eines Druckkopfes, aufweisend die Temperierungs- und Überführungseinrichtung, erleichtert.

Eine Sensoraufnahme nach Anspruch 9 erleichtert eine Ankopplung des Temperaturfühlers.

Die Vorteile eines 3D-Druckers nach Anspruch 10 entsprechen denen, die vorstehend unter Bezugnahme auf die Temperierungs- und Überführungseinrichtung bereits erläutert wurden. Entsprechendes gilt für die Vorteile des mit einem derartigen 3D-Druckers hergestellten Kunststoff-Bauteils.

Ein Ausführungsbeispiel der Erfindung wird nachfolgend anhand der Zeichnung näher erläutert. In dieser zeigen:
- Fig. 1: Hauptkomponenten eines 3D-Druckers im Bereich eines Drucckopfes, zu dem eine in der Fig. 1 schematisch dargestellte Temperier- und Überführungseinrichtung zur Überführung eines Kunststofffilamentes in ein aufgeschmolzenes Druckmaterial gehört, die auch als Hotend bezeichnet wird;
- Fig. 2: eine perspektivische Ansicht des stärker im Detail und einschließlich einer Kühlrippen-Anordnung dargestellten Hotends;
- Fig. 3: eine Rückansicht des Hotends, gesehen aus Richtung III in Fig. 2;
- Fig. 4: in einer Ansicht aus einer der Fig. 3 entgegengesetzten Richtung einen Längsschnitt durch das Hotend längs zweier in einem Grundkörper des Hotends verlaufender Filamentkanäle; und
- Fig. 5: in einer der Fig. 4 entsprechenden Schnittdarstellung einen Grundkörper des Hotends ohne eine in den Figuren 1 bis 4 dargestellte Druckdüse.

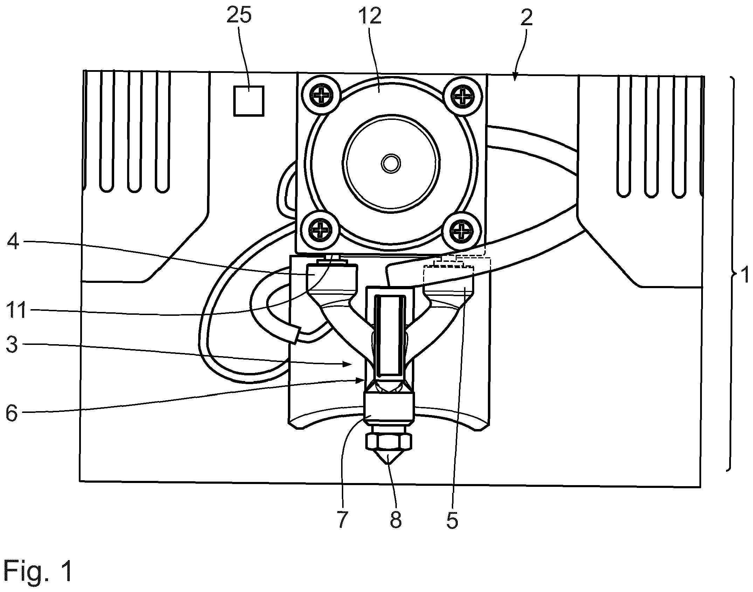

Fig. 1 zeigt einen Druck-Düsenkopf bzw. Druckkopf 1 eines ansonsten nicht dargestellten 3D-Druckers 2. Der 3D-Drucker 2 kommt insbesondere für Anwendungen in der Lebensmittelindustrie und/oder der Medizintechnik zum Einsatz.

Der Druckkopf 1 hat eine Temperier- und Überführungseinrichtung 3 zur Überführung mindestens eines Kunststofffilaments von einem festen Zustand in ein aufgeschmolzenes, zähflüssiges Druckmaterial. Eine derartige Temperier- und Überführungseinrichtung wird auch als Hotend bezeichnet.

Das Hotend 3 dient in der Ausführung nach Fig. 1 zur Überführung von zwei Kunststofffilamenten von einem jeweils festen Zustand in ein aufgeschmolzenes, zähflüssiges Druckmaterial, wobei zwischen den beiden Kunststofffilamenten ausgewählt werden kann. Dies kann einerseits zu einem Materialwechsel genutzt werden, falls ein Kunststoff-Bauteil aus unterschiedlichen Kunststofftypen gefertigt werden soll, oder auch zum nahtlosen 3D-Drucken, wobei während dem Wechsel eines Kunststofffilaments mit Hilfe des anderen Kunststofffilamentes gedruckt wird. Unterschiedliche Filamenttypen können dabei unterschiedliche Kunststoffmaterialien, unterschiedliche Materialqualitäten oder auch unterschiedliche Materialfarben aufweisen.

Bei einer nicht dargestellten Ausführung des Hotends dient dieses zur Überführung zu genau einem Kunststofffilament vom festen Zustand in das aufgeschmolzene Druckmaterial.

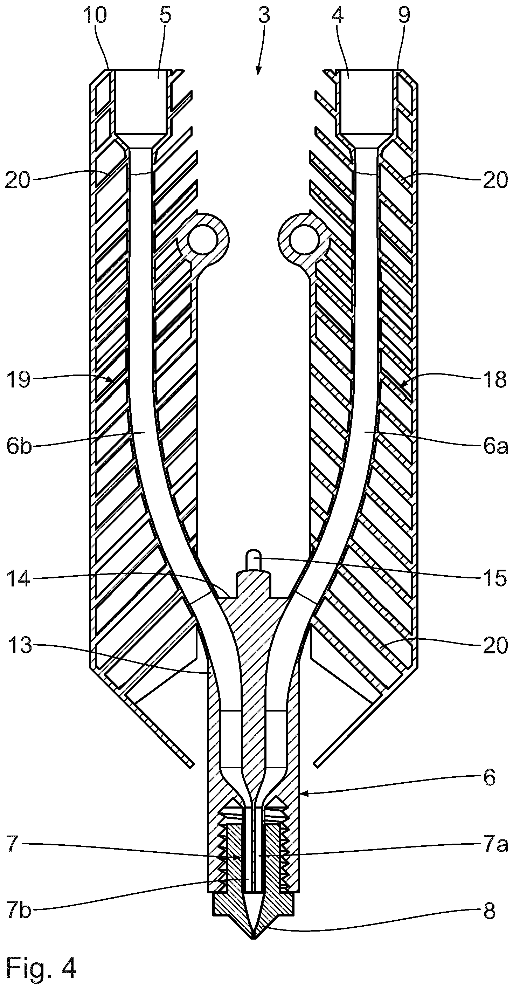

Die Kunststofffilamente sind in der Zeichnung nicht dargestellt und werden zwei Einlass-Kanalanschlüssen 4, 5 eines Grundkörpers 6 des Hotends 3 zugeführt. Die Einlass-Kanalanschlüsse 4, 5, die auch als Einlässe bezeichnet werden, münden über Filament-Führungskanäle 6a, 6b (vgl. Fig. 4) im Grundkörper 6 und einen Auslasskanalabschnitt 7 (Auslässe 7a, 7b, vgl. Fig. 4) des Grundkörpers 6 in eine Druckdüse 8. Die Druckdüse 8 stellt eine mit dem Grundkörper 6 des Hotends 3 lösbar verbindbare Komponente dar. Die Druckdüse 8 dient zum Abgeben des Druckmaterials beim 3D-Drucken.

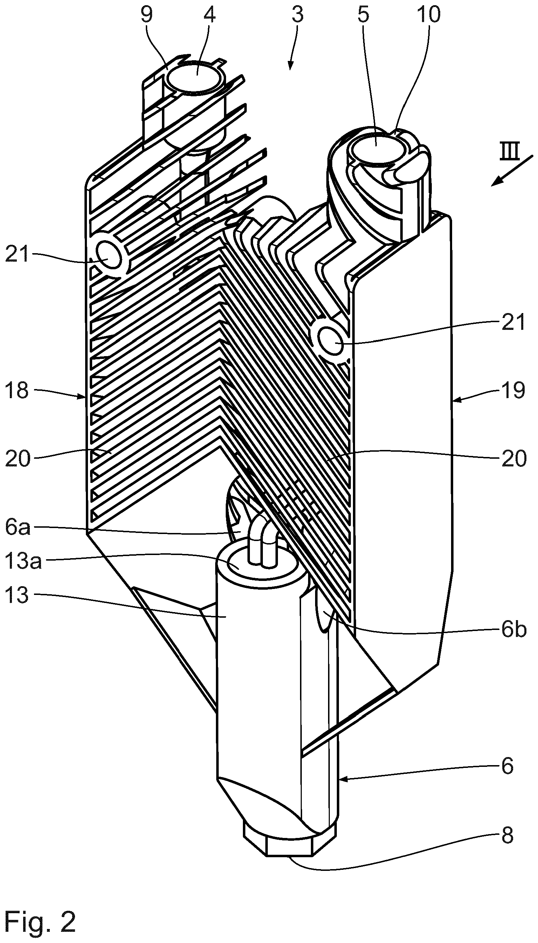

Fig. 2 zeigt Details des Hotends 3. Stirnwände 9, 10 der Einlässe 4, 5 stellen Anschlusspunkte für eine Wärmeleitungs-Unterbrechungskomponente 11 (vgl. Fig. 1) des Düsenkopfes 1 dar, die auch als Heatbreak bezeichnet ist und über die eine weitgehende thermische Entkopplung des Hotends 3 zu stromaufwärts liegenden Kunststofffilament-Führungskomponenten erfolgt.

Stromaufwärts des Hotends 3 ist weiterhin ein Druckkopf-Kühlkörper 12 (vgl. Fig. 1) des Druckkopfes 1 angeordnet, der über einen Lüfter aktiv gekühlt sein kann.

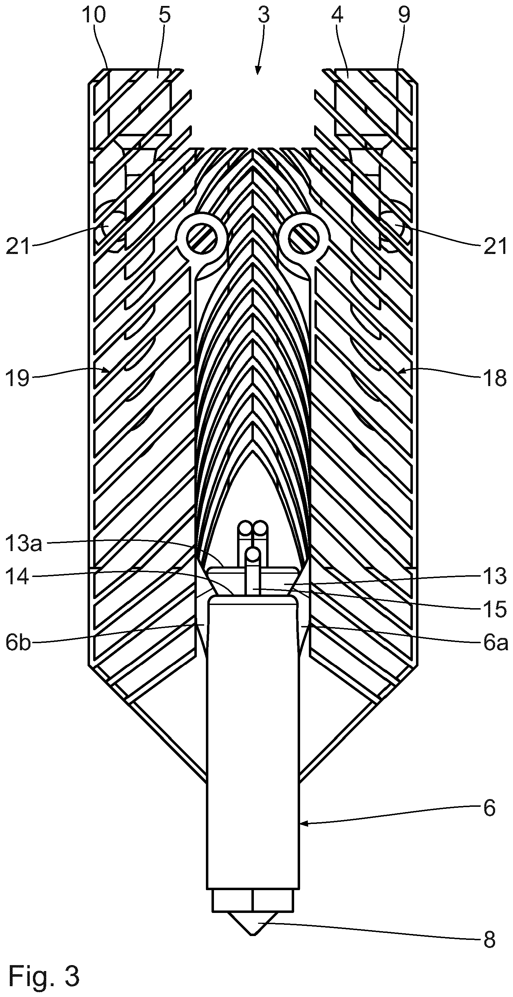

Der Grundkörper 6 des Hotends 3 hat weiterhin eine Heizaufnahme 13 (vgl. Fig. 2) für eine in der Fig. 1 nicht sichtbare Heizeinheit 13a (vgl. Fig. 2) in Form einer Heizpatrone. Weiterhin hat der Grundkörper 6 eine Sensoraufnahme 14 für einen Temperaturfühler, von dem in der Fig. 3 ein Signalkabelabschnitt 15 sichtbar ist.

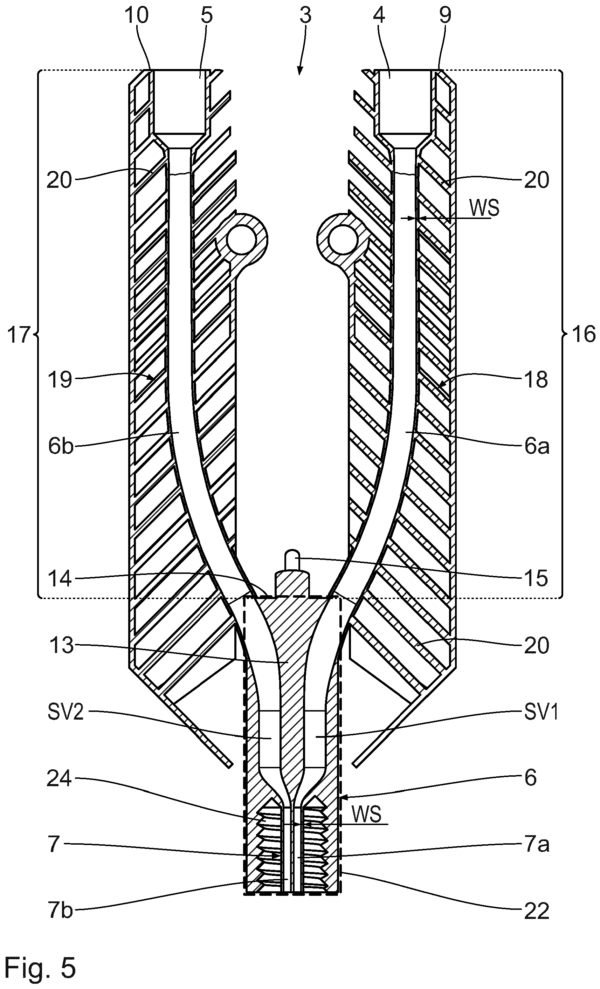

Ein Kanalverlauf der Filamentkanäle 6a, 6b zwischen den Einlässen 4, 5 und dem Auslässen 7a, 7b des Grundkörpers 6 ist aus der Fig. 5 ersichtlich. Die beiden Filamentkanäle 6a, 6b vereinigen sich auslassseitig nicht im Grundkörper 6, sondern erst im weiteren Verlauf in der Druckdüse 8. Entsprechend liegt kein gemeinsamer Kanal für die Filamente im Grundkörper 6 des Hotends 3 vor.

Der Grundkörper 6 ist aus einem Metall mit einem Wärmeleitungskoeffizienten von weniger als 100 W/(mK) gefertigt. Bei diesem Metall handelt es sich um ein lebensmittelechtes Material entsprechend den Vorgaben der EG-Verordnung 193/2004 bzw. entsprechend dem Herstellungsvorgaben der EG-Verordnung 2023/2006. Bei dem Metall handelt es sich um einen hochlegierten Stahl, nämlich um einen Edelstahl. Der Edelstahl hat einen Kohlenstoffanteil im Bereich zwischen 0,5 % und 5 %, beispielsweise von 2 %. Der Edelstahl hat einen Chromanteil im Bereich zwischen 10 % und 25 %, zum Beispiel von 17 %. Der Edelstahl hat einen Nickelanteil im Bereich zwischen 10 % und 15 %, zum Beispiel von 12 %. Der Edelstahl hat einen Molybdänanteil im Bereich zwischen 1 % und 5 %, zum Beispiel von 2 %. Bei dem Edelstahl kann es sich um einen Edelstahl mit der Werkstoffnummer 1.4404 handeln.

Eine Wandstärke WS der Filamentkanäle 6a, 6b beträgt zwischen den jeweiligen Einlässen 4, 5 und den jeweiligen Auslässen 7a, 7b, abgesehen vom direkten Einlassbereich, jeweils höchstens 0,4 mm, zum Beispiel 0,2 mm.

Die Filamentkanäle 6a, 6b stehen über einlassseitige Kühl-Kanalabschnitte 16, 17, die sich von den Einlässen 4, 5 bis hin zur Heizaufnahme 13 erstrecken, mit Kühlkörpern 18, 19 zur Wärmeabfuhr vom Inneren der Filamentkanäle 6a, 6b nach außen in wärmeleitender Verbindung. Die Kühlkörper 18, 19 sind jeweils durch eine Mehrzahl von Kühlrippen 20 gebildet. Jeder der Kühlkörper 18, 19 hat dabei zwanzig Kühlrippen 20. Je nach Ausführung der Kühlkörper 18, 19 kann die Anzahl der Kühlrippen 20 auch anders und z. B. im Bereich zwischen zwei und einhundert sein.

Wie aus der perspektivischen Darstellung nach Fig. 2 ersichtlich ist, stehen zumindest einige der Kühlrippen 20 der Kühlkörper 18, 19 miteinander in mechanischer Verbindung. Die Kühlkörper 18, 19 sind so gestaltet und geformt, dass Kühlluft von außen hin zu den Kühl-Kanalabschnitten 16, 17 der Filamentkanäle 6a, 6b geführt wird.

Die Kühlkörper 18, 19 haben Lüfter-Anschlüsse, über die den Kühlkörpern 18, 19 Kühlluft von außen, beispielsweise über entsprechende, vom Lüfter des Druckkopf-Kühlkörpers 12 ausgehende Luftkanäle, zugeführt werden kann. Insgesamt hat das Hotend 3 zwei Lüfter-Anschlüsse 21, die beispielsweise in der Fig. 3 sichtbar sind.

Über die Lüfter-Anschlüsse 21 kann eine aktive Kühlung der Kühlkörper 18, 19 gewährleistet werden.

Die Kühlkörper 18, 19 stellen jeweils monolithische Bestandteile des Grundkörpers 6 dar.

Fig. 5 zeigt hervorgehoben einen Schmelzbereich 22 des Grundkörpers 6 des Hotends 3. In den Kanalabschnitten der Filamentkanäle 6a, 6b, die sich im Schmelzbereich 22 befinden, liegt im Betrieb des Hotends 3 mittels der Heizeinheit in der Heizaufnahme 13 aufgeschmolzenes Druckmaterial vor. Die beiden Filamentkanäle 6a, 6b haben in den Abschnitten, die im Schmelzbereich 22 vorliegen, insgesamt ein Schmelzvolumen SV1 + SV2, das kleiner ist als 100 mm³.

Ein Abstand zwischen den Schmelzvolumina SV1, SV2 und einem Heizeinheit-Aufnahmevolumen der Heizaufnahme 13 beträgt höchstens 0,5 mm.

Die Schmelzvolumina SV1 und SV2 sind stromaufwärts der Filamentkanäle 6a, 6b begrenzt durch Bereiche, in denen eine direkte Ankopplung dieser Filamentkanäle 6a, 6b an die Heizaufnahme 13 vorliegt. Stromabwärts sind die Schmelzvolumina SV1, SV2 der Filamentkanäle 6a, 6b durch den jeweiligen Austritt hin zur Druckdüse 8 begrenzt.

Zwischen dem jeweiligen Einlass 4, 5 und dem Beginn des Schmelzbereichs 22 haben Kanalabschnitte der Filamentkanäle 6a, 6b einen konstanten Querschnitt. Innerhalb des Schmelzbereichs 22, also im jeweiligen Schmelzvolumen SV1, SV2, verjüngen sich anschließende Kanalabschnitte der Filamentkanäle 6a, 6b im Querschnitt stetig.

In den einlassseitigen Kanalabschnitten der Filamentkanäle 6a, 6b kann ein Kanaldurchmesser im Bereich zwischen 1,80 mm und 2,0 mm vorliegen. Der Kanaldurchmesser kann insbesondere 1,85 mm betragen. Im Bereich der Auslässe 7a, 7b kann ein Kanaldurchmesser im Bereich zwischen 0,5 mm und 0,8 mm vorliegen. Der Kanaldurchmesser kann dort insbesondere 0,7 mm betragen.

Zwischen den Einlässen 4, 5 und den Auslässen 7a, 7b verlaufen die Filamentkanäle 6a, 6b ohne sprunghaften Richtungswechsel und haben insbesondere keine 90°-Umlenkung.

Die Auslasskanalabschnitte, über die die Auslässe 7a, 7b in die Druckdüse 8 einmünden, sind in einer Betriebsstellung des Hotends 3 vertikal angeordnet.

Der Grundkörper 6 des Hotends 3 ist insgesamt im 3D-Druck gefertigt.

Der Temperaturfühler in der Sensoraufnahme 14 dient im Betrieb zur Überwachung einer Temperatur des Druckmaterials im Bereich einer Druckdüsen-Aufnahme 24 für die Druckdüse 8.

Beim 3D-Drucken mit dem 3D-Drucker 2 wird zunächst ausgewählt, mit welchen Typen Kunststofffilament die beiden Einlässe 4, 5 bestückt werden. Über eine zentrale Steuereinrichtung 25 wird der 3D-Drucker in Betrieb gesetzt und die Heizeinheit heizt, überwacht über den Temperaturfühler, den Schmelzbereich 22 auf, bis das zum Einsatz kommende Kunststofffilament im Schmelzvolumen SV1 bzw. SV2 als aufgeschmolzenes, zähflüssiges Druckmaterial vorliegt. Der 3D-Drucker 2 ist nun einsatzbereit und es kann, wie üblich, mit Hilfe einer xyz-Relativverlagerungs-Steuerung zwischen dem Düsenkopf 1 und einem Träger für das herzustellende Kunststoff-Bauteil, das Kunststoff-Bauteil schichtweise gedruckt werden.

Über eine entsprechende Filament-Zuführung kann gesteuert werden, über welchen Filamentkanal 6a, 6b eine Kunststofffilament-Zuführung hin zur Druckdüse 8 erfolgt. Aufgrund des sehr kleinen gesamten Schmelzvolumens SV1 + SV2 ist für den Fall, dass bei dem Filamentkanal-Wechsel tatsächlich auch ein Materialwechsel erfolgt, nur ein geringes Totvolumen vorhanden, welches gegebenenfalls nicht zum Bauteil-Aufbau genutzt werden kann.

Der nicht verwendete Filamentstrang kann aufgrund der Kanalabschnitte der Filamentkanäle 6a, 6b mit konstantem Querschnitt zurückgezogen werden, um ein unerwünschtes Aufschmelzen zu verhindern.

Ein Temperaturunterschied zwischen der Druckdüsen-Aufnahme 24 des Grundkörpers 6 einerseits und den Stirnwänden 9, 10 der Einlässe 4, 5 kann im Bereich von 100° C liegen.

## Patentansprüche

1. Temperier- und Überführungseinrichtung (3) für einen 3D-Drucker (2), zur Überführung mindestens eines Kunststofffilaments von einem festen Zustand in ein aufgeschmolzenes, zähflüssiges Druckmaterial,
- mit einer Druckdüse (8) zum Abgeben des Druckmaterials,
- mit einem Grundkörper (6),
-- mit mindestens einem Filamentkanal (6a, 6b) mit einem Einlass (4, 5) zum Zuführen des mindestens einen Kunststofffilaments und mit einem Auslass (7a, 7b) zum Abgeben des Druckmaterials hin zur Druckdüse (8),
-- mit einer Heizaufnahme (13) für eine Heizeinheit (13a), wobei die Heizaufnahme (13) einem Schmelzvolumen (SV1 + SV2) des Filamentkanals (6a, 6b) benachbart ist, in dem im Betrieb der Einrichtung (3) mittels der Heizeinheit (13a) aufgeschmolzenes Druckmaterial vorliegt,
- wobei der Grundkörper (6) aus einem Metall mit einem Wärmeleitungskoeffizienten von weniger als 100 W/(mK) gefertigt ist,
- wobei der Filamentkanal (6a, 6b) über einen einlassseitigen Kühl-Kanalabschnitt (16, 17) des Filamentkanals (6a, 6b) mit mindestens einem Kühlkörper (18, 19) zur Wärmeabfuhr in wärmeleitender Verbindung steht,
- wobei der Kühlkörper so gestaltet ist, dass Kühlluft hin zum Kühl-Kanalabschnitt geführt wird.

2. Einrichtung nach Anspruch 1, **dadurch gekennzeichnet, dass** der Grundkörper (6) aus hochlegiertem Stahl gefertigt ist.

3. Einrichtung nach Anspruch 1 oder 2, **dadurch gekennzeichnet, dass** der Filamentkanal zwischen dem Einlass und dem Auslass eine Wandstärke von höchstens 0,4 mm hat.

4. Einrichtung nach einem der Ansprüche 1 bis 3, **dadurch gekennzeichnet, dass** der Kühlkörper eine Mehrzahl von Kühlrippen umfasst.

5. Einrichtung nach Anspruch 4, **dadurch gekennzeichnet, dass** der Kühlkörper (18, 19) aktiv gekühlt wird.

6. Einrichtung nach Anspruch 4 oder **5, dadurch gekennzeichnet, dass** der Kühlkörper (18, 19) ein monolithischer Bestandteil des Grundkörpers (6) ist.

7. Einrichtung nach einem der Ansprüche 1 bis 6, **gekennzeichnet durch** einen Abstand zwischen dem Schmelzvolumen (SV1 + SV2) und einem Heizeinheit-Aufnahmevolumen der Heizaufnahme (13), der höchstens 0,5 mm beträgt.

8. Einrichtung nach einem der Ansprüche 1 bis 7, **dadurch gekennzeichnet, dass** der Grundkörper (6) durch 3D-Druck gefertigt ist.

9. Einrichtung nach einem der Ansprüche 1 bis 8, **dadurch gekennzeichnet, dass** der Grundkörper (6) eine Sensoraufnahme (14) für einen Temperaturfühler aufweist.

10. 3D-Drucker (2) mit einer Einrichtung (3) nach einem der Ansprüche 1 bis 9.

## Claims

1. Temperature control and transformation device (3) for a 3D printer (2), for transforming at least one plastic filament from a solid state into a melted viscous printing material,
- having a printing nozzle (8) for dispensing the printing material,
- having a base body (6),
-- having at least one filament channel (6a, 6b) with an inlet (4, 5) for supplying the at least one plastic filament and with an outlet (7a, 7b) for dispensing the printing material to the printing nozzle (8),
-- having a heating receptacle (13) for a heating unit (13a), wherein the heating receptacle (13) is adjacent to a melting volume (SV1 + SV2) of the filament channel (6a, 6b), in which printing material melted by means of the heating unit (13a) is present during operation of the device (3),
- wherein the base body (6) is manufactured from a metal having a coefficient of thermal conduction of less than 100 W/(mK),
- wherein the filament channel (6a, 6b) is in thermally conductive connection to at least one cooling body (18, 19) for heat dissipation via an inlet-side cooling channel section (16, 17) of the filament channel (6a, 6b),
- wherein the cooling body is configured such that cooling air is guided towards the cooling channel section.

2. Device according to Claim 1, **characterised in that** the base body (6) is made from high-alloy steel.

3. Device according to Claim 1 or 2, **characterised in that** the filament channel has a wall thickness of no more than 0.4 mm between the inlet and the outlet.

4. Device according to one of Claims 1 to 3, **characterised in that** the cooling body comprises a plurality of cooling fins.

5. Device according to Claim 4, **characterised in that** the cooling body (18, 19) is actively cooled.

6. Device according to Claim 4 or 5, **characterised in that** the cooling body (18, 19) is a monolithic component of the base body (6).

7. Device according to one of Claims 1 to 6, **characterised by** a distance between the melting volume (SV1 + SV2) and a heating unit receiving volume of the heating receptacle (13), which is no more than 0.5 mm.

8. Device according to one of Claims 1 to 7, **characterised in that** the base body (6) is manufactured by 3D printing.

9. Device according to one of Claims 1 to 8, **characterised in that** the base body (6) has a sensor receptacle (14) for a temperature sensor.

10. 3D printer (2) having a device (3) according to one of Claims 1 to 9.

## Revendications

1. Dispositif de thermorégulation et de transformation (3) pour une imprimante 3D (2), destiné à transformer au moins un filament en matière plastique depuis un état solide en un matériau d'impression visqueux fondu,
- avec une buse d'impression (8) destinée à distribuer le matériau d'impression,
- avec un corps de base (6),
-- comportant au moins un canal pour filament (6a, 6b) doté d'une entrée (4, 5) destinée à introduire l'au moins un filament en matière plastique et d'une sortie (7a, 7b) destinée à distribuer le matériau d'impression jusqu'à la buse d'impression (8),
-- comportant un logement de chauffage (13) pour une unité de chauffage (13a), le logement de chauffage (13) étant adjacent à un volume fondu (SV1 + SV2) du canal pour filament (6a, 6b) dans lequel se trouve, lors du fonctionnement du dispositif (3), du matériau d'impression fondu au moyen de l'unité de chauffage (13a),
- dans lequel le corps de base (6) est fabriqué en un métal doté d'un coefficient de conductibilité thermique inférieur à 100 W/(mK),
- dans lequel le canal pour filament (6a, 6b) est en liaison thermoconductrice avec au moins un corps de refroidissement (18, 19) destiné à la dissipation de la chaleur, par le biais d'une partie de canal de refroidissement (16, 17), située côté entrée, du canal pour filament (6a, 6b),
- dans lequel le corps de refroidissement est conçu de telle manière que de l'air de refroidissement est guidé jusqu'à la partie de canal de refroidissement.

2. Dispositif selon la revendication 1, **caractérisé en ce que** le corps de base (6) est fabriqué en acier fortement allié.

3. Dispositif selon la revendication 1 ou 2, **caractérisé en ce que** le canal pour filament présente, entre l'entrée et la sortie, une épaisseur de paroi de 0,4 mm au maximum.

4. Dispositif selon l'une des revendications 1 à 3, **caractérisé en ce que** le corps de refroidissement comprend une pluralité d'ailettes de refroidissement.

5. Dispositif selon la revendication 4, **caractérisé en ce que** le corps de refroidissement (18, 19) est refroidi de manière active.

6. Dispositif selon la revendication 4 ou 5, **caractérisé en ce que** le corps de refroidissement (18, 19) est un élément constitutif monolithique du corps de base (6).

7. Dispositif selon l'une des revendications 1 à 6, **caractérisé par** une distance entre le volume fondu (SV1 + SV2) et un volume de logement d'unité de chauffage du logement de chauffage (13), qui est de 0,5 mm au maximum.

8. Dispositif selon l'une des revendications 1 à 7, **caractérisé en ce que** le corps de base (6) est fabriqué par impression 3D.

9. Dispositif selon l'une des revendications 1 à 8, **caractérisé en ce que** le corps de base (6) présente un logement pour capteur (14) pour une sonde de température.

10. Imprimante 3D (2) comportant un dispositif (3) selon l'une des revendications 1 à 9.
